# EUROPEAN PATENT SPECIFICATION

(11) **EP 2 458 033 B1**
(45) Date of publication and mention of the grant of the patent: **09.10.2013**
(21) Application number: 11468004.4
(22) Date of filing: 04.10.2011
(51) Int. Cl.: C23F 1/00, C23F 1/10, G01N 1/32

(54) **Procedure of dynamic deep etching and particle extraction from aluminium alloys**
Verfahren zur dynamischen Tiefätzung und Partikelextraktion aus Aluminiumlegierungen
Procédé de gravure profonde dynamique et extraction de particules d'alliages d'aluminium

(30) Priority: 11.10.2010 SI 201000313
(43) Date of publication of application: 30.05.2012
(73) Proprietor: Univerza V Mariboru, 2000 Maribor (SI)
(72) Inventor: Boncina Tonica, 2000 Maribor (SI); Zupanic Franc, 2288 Hajdina (SI); Markoli Bostjan, 1000 Ljubljana (SI)

(56) References cited:
- DE-A1- 2 103 261
- GB-A- 1 460 622
- US-A- 3 411 999
- US-A- 3 767 491
- US-A- 4 612 073
- US-A- 5 714 407
- CALVO F A ET AL: "Reagents for deep-etching Al-Si alloys: Scanning electron microscopy microstructures", METALLOGRAPHY, AMERICAN ELSEVIER, NEW YORK, NY, US, vol. 20, no. 2, 1 May 1987 (1987-05-01), pages 213-222, XP024082785, ISSN: 0026-0800, DOI: 10.1016/0026-0800(87)90030-9 [retrieved on 1987-05-01]
- GUPTA, A., K.; MAROIS, P., H.; LLOYD, D., J.: "Review of the Techniques for the Extraction of Second-Phase Particles from Aluminum Alloys", MATERIALS CHARACTERIZATION, vol. 37, 1996, pages 61-80, XP002674067, DOI: 1016/S1044-5803(96)00046-0

## Description

The invention belongs to the area of non-ferrous metallurgy, and is related to the procedures for etching aluminium alloys.

Etching is a method for preparation of materials. It predominantly enables determination of characteristics for metallic, but in some cases also for polymeric materials. It is based on revealing the macro- and microstructure. It is convenient for use in laboratories, as well as in industry for quality control of products.

There several types of etching, such as chemical, electrolytic, heat, ion and others, they are based on different physical and chemical processes. Our proposal is a kind of chemical etching of aluminium alloys, which is based on selective dissolution of samples in a multi-component etching solution. The chemical etching is in fact the process of controlled surface corrosion. Microstructural constituents in a material possess different electrode potentials; some act as cathodes, whereas other as anodes, the latter constituents dissolves during etching. The etchant is usually composed of three types of ingredients: corrosive, modifying and oxidative ingredients.

The most important etching parameters are: types of components and their concentrations in an etchant, duration of rinsing, temperatures of the electrolyte and a sample. A type of rinsing also has a high influence: the sample can rest in the solution, or it can be moved (usually in a circular manner) and/or it can be rubbed against an abrasive material.

According to the intensity of a process or the mode of execution, etching can be divided to:
1. Normal etching. The contrast is achieved between all micro- and macrostructural constituents. The prerequisite is a clean smooth surface, which can be prepared by mechanical grinding and polishing of a sample.
2. Deep etching. Using this procedure a considerable amount of an aluminium matrix is dissolved, whereas other microstructural constituents remain intact, and stay at the same positions in a material as before etching. Using this procedure a sample is produced having strongly etched surface that is convenient for different types of analysis.
3. Extraction of microstructural constituents by a controlled corrosion. During extraction, the aluminium matrix is completely dissolved, and an extracted powder sample is obtained. In this case it is not possible to determine from which part of the sample an individual particle arises. On the other hand, we can determine geometrical features, structure and chemical composition of a particle.

Our proposal is related to the procedures of deep etching and extraction of microstructural constituents from aluminium alloys.

The microstructure of the most commercial and new aluminium alloys consists of dispersed hard intermetallic and other phases (hardness even higher than 1000 HV) in a soft aluminium matrix (hardness around 70 HV). Typical preparation of a sample is usually composed of grinding and polishing, and gentle etching. Very common problem is that scratches remain on the soft aluminium matrix, which cannot be easily removed. The surface can be damaged due to mechanical treatment because deformation and oxide layers can be formed, which can adversely affect the authenticity of the sample.

Because of this and different requirements for sample preparation for different analysing methods, techniques of deep etching and particle extraction are often used.

It is known, that the extraction of particles in aluminium alloys is rather difficult, because the main types of particles, such as inclusions, dispersoids and precipitates dissolve before the aluminium matrix.

### Information regarding the known solutions and their disadvantages

Descriptions and the main characteristics of etching processes can be found in the monographs and handbooks in the field of metallography. The most widely used handbooks in this area are:
1. George, F., Vander, Voort. Metallography Principles and Practice, McGraw-Hill, 1984.
2. ASM Handbook, Volume 9, Metallography and Microstructures. Volume Editor George, F., Vander Voort, ASM International, Materials Park 2004.

Further procedures and etchant solutions can be found in journal and conference articles. One of the most important sources is an overview article, which brought together the most important methods and solutions used for different aluminium alloys:
1. Gupta, A., K., Marois, P., H., Lloyd, D., J. Review of the Techniques for the Extraction of Second-Phase Particles from Aluminum Alloys, Materials Characterization, 1996, vol. 37, str. 61-80.

The main disadvantages are complicated and time-consuming procedures, the necessary application of dangerous chemicals, which are ecologically inadequate. All these require additional security measures. The effectiveness of current procedures for deep-etching and powder extraction is not adequate. It was namely found that many phases that should be preserved dissolve, or change their shape during preparation. In some cases also undesired products can form. In many cases it is not possible to extract very small particles, e. g. those with sizes smaller than 1 µm.

In all above-mentioned cases, dissolution takes place more or less uniform from the surface towards inside of sample. This affects the effectiveness of the removal of the matrix and particles. The techniques of deep etching and particle extraction are normally separated from each other.

By individual methods, several other disadvantages can be ascertained. By dissolution with boiling phenol a harmful gas is released, having very sharp smell. In some cases undesired aluminium phenolate can be formed.

By using a solution consisting of iodine in methanol it was found that it can be successful for very small number of alloys and for extracting limited number of phases.

The etching procedure using a solution of potassium iodide under the influence of electric current is often quoted in the literature. Procedure is long-lasting and very delicate. A complex aluminium hydroxide forms, which must be treated using EDTA and HCI. The undesired consequences are dissolution of some phases and contamination of the sample with EDTA-crystals.

### Description of a new solution

### A procedure for dynamic deep etching and extraction of particles from aluminium alloys

The invention is a procedure for dynamic deep etching and extraction of particles from aluminium alloys used for preparation of samples for analyses and control of aluminium alloys using scanning and transmission electron microscopy and X-ray diffraction.

The term "dynamic" is used because of the application of ultrasonic vibrations that makes the movement of an electrolyte more vigorous and accelerates the process dynamics. The results are two kinds of samples: deep-etched surface of a compact sample and extracted powder. It is important that dissolution of the sample takes place throughout the whole volume of the sample, and that only the aluminium matrix is dissolved, whereas the remaining phases remain chemically and geometrically unchanged, and that the samples do not contain the remains of the dissolution products.

We used a solution containing from 3 to 10 g of iodine and from 10 to 17 g of tartaric acid dissolved in 100 ml of methanol. The effectiveness of etching was conveniently influenced by the application of the so-called "dynamic etching", by setting the beaker with an etchant into an ultrasonic bath. Ultrasonic vibrations influenced, by point action, the damage of the oxide layer, causing the formation of small pinholes, which later widened and formed craters. The additional role of ultrasonic vibrations was the accelerated removal of extracted particles from the surface and from the sample interior.

Selected components of an etchant (I₂, tartaric acid (C₄H₆O₆) and methanol) cause that phases in an alloy act as cathodes, and aluminium matrix as the anode. This enables complete dissolution of aluminium matrix, whereas other phases remain unchanged, and that they can be removed out of the etching solution by filtering. Very important component is iodine, which is the least reactive among the halogenes, it possesses the largest ionic diameter (0.22 nm), the smallest electronegativity (2.5) and the slowest diffusivity through the pasivation layer, and the best ability to adsorption into oxide layer. In the selected solution it acts as an oxidant that accelerates dissolution. Its stability enables controlled dissolution. The main drawback is that the dissolution processes are long-lasting, they require even several days.

The task of the tartaric acid is to prevent hydrolysis of aluminium ions during dissolution. Gelation of aluminium hydroxide would take place without tartaric acid, which may completely stop the dissolution process.

Under the action of the solution and ultrasonic vibrations, the etchant enters into a sample through surface pinholes and cracks and penetrates into the whole volume of the sample. Reactions take place throughout the entire volume of the sample. The sample becomes very brittle, and can be easily fractured.

The procedure incorporates two methods: deep etching and particle extraction, carried our in two stages, the first stage consists of alternate dynamic etching by the application of ultrasonic vibrations, and static etching in an iodine - methanol etching solution:
1. Rinsing a sample of an aluminium alloy in a solution containing from 3 to 10 g of iodine and from 10 to 17 g of tartaric acid in the methanol in the temperature range between 10 °C and 40 °C.
2. The beaker with the solution and the sample is placed into an ultrasonic bath. The sequential periods of etching exposed to ultrasonic vibrations from 1 to 15 minutes and periods of resting from 10 min to 24 hours, when ultrasonic vibrations are not applied.
3. The procedure of rinsing and dissolving, followed by exposure to ultrasonic action is alternately repeated 10 to 50 times.

The procedure of deep etching is finished by final treatment in the ultrasonic bath, to remove the final particles, washing with alcohol and drying by using warm air. The fractured surface is the most convenient for the analyses.

The result is a clean fractured surface with partly removed aluminium matrix and particles that remain in the material.

The procedure of particle extraction in the second stage consists of the following steps:
4. The solution is filtered using a glass filter, which is connected to the vacuum pump, and can retain particles even smaller than 500 nm.
5. The sediment is washed by alcohol and water, to remove the water soluble iodides and finally filtered and dried in the air.

The result is a powder sample.

Except methanol, all other components of the etchant and dissolution products are not poisonous, and during the dissolution no other harmful gases are released. The procedure is used for aluminium alloys, that are commercially available, and also to novel alloys containing Mn, Mg, Si, Be, Cu, Ce, Fe and Ti.

The invention is convenient both for the use in laboratory and in industry. The etching procedures are important for the quality control of incoming material, semi-products and final products in the metal processing industry. The procedure of dynamic etching is applicable for quality control of aluminium alloy products in cast and heat-treated conditions that have no surface coatings.

## Claims

1. Procedure for dynamic deep etching and particle extraction from aluminium alloys **characterized by** including two methods: deep etching and particle extraction, carried our in two stages, the first stage consists of alternate dynamic etching **characterised by** the application of ultrasonic vibrations, and static etching in an iodine - methanol etching solution, which is applied in both methods, and the second stage, required for the particle extraction method only, consisting of filtering, washing, final filtering and drying.

2. The procedure in the first stage according to claim (1) consists of sequential periods of etching of aluminium alloys containing Mn, Mg, Si, Be, Cu, Ce, Fe and Ti in an appropriate etching solution exposed to ultrasonic vibrations for 1 min to 15 min and periods of resting for 10 min to 24 hours, when ultrasonic vibrations are not applied, repeated 10 to 50 times.

3. The solution used in the procedure according to claim (1) composed of 3 to 10 g iodine and 10 to 17 g of tartaric acid dissolved in methanol exposed to alternate dynamic and static etching according to claim (2) in the temperature range between 10°C and 40 °C is said to uniformly dissolve an aluminium matrix throughout the entire volume and leaving the particles intact in aluminium alloys containing Mn, Mg, Si, Be, Cu, Ce, Fe and Ti.

## Patentansprüche

1. Das Verfahren zur dynamischen Tiefätzung und Partikelextraktion aus Aluminiumlegierungen umfasst zwei Methoden: Die Tiefätzung und die Teilchenextraktion, die in zwei Stufen durchgeführt werden; die erste Stufe besteht aus der dynamischen Ätzung mit Ultraschallschwingungen sowie der statischen Ätzung in einer lod - Methanol Ätzlösung, die in beiden Verfahren angewendet wird; und die zweite Stufe, die nur bei dem Teilchen-Extraktionsverfahren verwendet wird, besteht aus Filtern, Wäschen, Filtrern und Trocknen.

2. Das Verfahren in der ersten Stufe nach Anspruch (1) besteht aus aufeinanderfolgenden Perioden der Ätzung von Aluminiumlegierungen, die Mn, Mg, Si, Be, Cu, Ce, Fe und Ti enthalten, in einer geeigneten Ätzlösung, dabei die Ultraschallschwingungen dauern von 1 min bis 15 min; und Stillstandperioden ohne Ultraschallschwingungen von 10 min bis 24 Stunden; das Verfahren wird von 10 bis 50 Mal wiederholt.

3. Die Lösung beim Verfahren nach Anspruch (1) enthält von 3 bis 10 g Iod und von 10 bis 17 g Weinsäure in Methanol; dynamische und statische Ätzung erfolgt gemäß Anspruch (2) abwechselnd im Temperaturbereich von 10 °C bis 40 °C; so entsteht eine gleichmäßige Auflösung einer Aluminium-Matrix über das gesamte Volumen wobei die Teilchen in Aluminiumlegierungen mit Legierungselementen Mn, Mg, Si, Be, Cu, Ce, Fe und Ti intakt bleiben.

## Revendications

1. Procédé de gravure profonde dynamique et extraction de particules à partir d'alliages d'aluminium **caractérisé par** l'inclusion de deux procédés: gravure profonde et d'extraction des particules, effectuée notre en deux étapes, la première étape consiste en une alternance gravure dynamique, **caractérisé par** l'application de vibrations ultrasonores, et une gravure statique dans un solution méthanolique gravure, qui est appliquée dans les deux méthodes, et la deuxième étape, nécessaire pour la méthode d'extraction de particules uniquement, constituée de filtration, lavage, filtration et séchage final.

2. La procédé de la première étape selon la revendication (1) se compose de périodes successives de gravure des alliages d'aluminium contenant du Mn, Mg, Si, Be, Cu, Ce, Fe et de Ti dans une solution d'attaque chimique appropriée soumise à des vibrations ultrasoniques pendant 1 min. à 15 min. et des périodes de repos pendant 10 minutes à 24 heures, lorsque des vibrations ultrasoniques ne sont pas appliquées, répété 10 à 50 fois.

3. La solution utilisée dans le procédé selon la revendication: (1) composé de 3 à 10 g d'iode et de 10 à 17 g d'acide tartrique en solution dans le méthanol exposée à alternative gravure statique et dynamique selon la revendication; (2) dans la plage de température comprise entre 10 °C et 40 °C est dit à dissoudre uniformément une matrice d'aluminium à travers la totalité du volume, et en laissant intactes les particules en alliages d'aluminium contenant du Mn, Mg, Si, Be, Cu, Ce, Fe et Ti.
